# EUROPEAN PATENT SPECIFICATION

(11) **EP 0 705 063 B1**
(45) Date of publication and mention of the grant of the patent: **22.04.1998**
(21) Application number: 95915435.2
(22) Date of filing: 28.03.1995
(51) Int. Cl.: A23L 2/62, A23L 2/72, C12H 1/056, C12H 1/065, C12H 1/07

(54) **BEVERAGE STABILISATION**
STABILISATION VON GETRÄNKE
STABILISATION DE BOISSON

(30) Priority: 14.04.1994 GB 9407418
(43) Date of publication of application: 10.04.1996
(73) Proprietor: ISP INVESTMENTS INC., Wilmington, Delaware 19801 (US)
(72) Inventor: O'REILLY, James Phillip, Merrow Guildford, Surrey GU1 2QJ (GB)
(74) Representative: Ford, Michael Frederick
(86) International application number: US9503851
(87) International publication number: WO9528094

(56) References cited:
- CA-A- 1 178 222
- GB-A- 826 862
- US-A- 4 166 141
- US-A- 4 910 182

## Description

### FIELD OF THE INVENTION

This invention relates to the stabilisation of beverages through treatment with polyvinyl poly pyrrolidone.

### BACKGROUND OF THE INVENTION

Polyvinyl polypyrrolidone (PVPP) is a water-insoluble cross-linked polymer of vinyl pyrrolidone. It is customarily used in the treatment of several beverages to remove small quantities of unwanted materials.

An important application is to stabilise beer and enhance its storage life. After beer has been brewed it is customarily filtered and at this stage is a clear liquid free of haziness. However if the beer is then stored colloidal particles will form giving the beer a hazy appearance. This development of a colloidal haze is linked to the presence of polyphenolic molecules in the beer. In order to retard the development of such haze the customary treatment is to add a small quantity of PVPP to the beer. The PVPP serves to absorb these polyphenolic materials and after allowing contact for a sufficient length of time (which may be quite short), the PVPP with the absorbed polyphenolic materials is removed from the beer. See eg GB-A-826 862.

After it has been removed from the beer the PVPP may be discarded or it may be regenerated by contacting it with hot alkaline solution in which the polyphenolic materials dissolve, after which the PVPP may be washed and reused.

It is customary to remove the PVPP from the beer by means of a very large filtration vessel incorporating a stack of filters in the form of rotatable discs. This vessel is also used for regeneration of the PVPP. This vessel can run as a filter for a number of hours, at the end of which the filtration of the beer must be stopped for the PVPP in the vessel to be regenerated.

Although the amount of PVPP which is mixed with the beer is small, typically in the region of 35 grams per hectolitre of beer, the large volume of beer which is involved entails the use of a large and costly vessel for this filtration step to remove PVPP. This in turn necessitates operation as a batch process. Typical is a 30 hour filtration period followed by a 4 hour regeneration period.

It is fairly common that filtration to remove the PVPP is followed by passage of the beer through a further filter as a final filtration step to remove any remaining solids. This final filtration step may remove all solids larger than a size limit of 10 or 20 µm.

In spite of the high capital cost and the necessity of operating as a batch process, such a procedure has been in widespread commercial use since about 1979.

PVPP is used in a somewhat similar way to remove impurities from apple juice, and stabilise its colour.

Another application is in the processing of citrus juice. Addition of PVPP in a similar manner to the stabilisation of beer can remove substances responsible for bitter flavour, especially naringin which is phenolic and which is the principal source of bitter flavour.

In the prior art US-A-4166141 shows a "fluidized bed" treatment of beer by PVPP in which a small portion of PVPP slurry is drawn off for regeneration after separation of the PVPP by means which may be a centrifuge. CA-A-1178222 discloses a specific silica gel/PVP composition and suggests it might be separated from treated beverage by filtration or centrifugation.

We have now appreciated that a number of advantages can be achieved by use of a centrifuge to remove PVPP from a beverage. Accordingly this invention provides a method of treating a beverage which comprises:
i) contacting the beverage with PVPP to form a mixture, and subsequently
ii) centrifuging a main flow of the mixture to remove PVPP therefrom and concentrate the removed PVPP into a second flow in a small quantity of the beverage, and
iii) filtering the second flow to remove PVPP and regenerating washing and recycling that PVPP.

Material absorbed by the PVPP while in contact with the beverage will of course be removed from the beverage along with the PVPP.

We have observed that a centrifuge is capable of removing PVPP particles from a liquid stream with high efficiency.

A centrifuge can handle a high volume through-put of beverage, removing well over 95% of the PVPP from the beverage as a paste or slurry with solids content of at least 25 by weight, typically 35 to 40% by weight.

The beverage which has passed through the centrifuge is preferably filtered to remove any remaining solids, as may well be done in conventional treatment of beer as mentioned above. This final filtration step may desirably remove any particles larger than 10 or 20 µm. Since particles removed at this filter will be only a small proportion of the PVPP which has been used, they may if desired be recycled without regeneration.

The PVPP which is removed at the centrifuge is preferably delivered to a filter to collect the PVPP The beverage which is the filtrate from this filter can then be returned to the main flow of beverage.

It is preferred that this filtration of the collected PVPP is carried out using two (or possibly more) filters so that one (or possibly more than one) filter can be used for collecting PVPP while another filter (or possibly more than one) in which PVPP has accumulated is being prepared for reuse. It will usually be sufficient to use two filters working alternately. However the use of more than two filters is possible.

The PVPP which is collected at a filter is preferably regenerated in that filter before being recycled. Regeneration can be accomplished by washing the bed of PVPP on the filter with an alkaline solution, typically at a temperature above ambient, followed by neutralisation and washing. After regeneration the PVPP can be recycled so as once again to be brought into contact with the beverage, to absorb materials which it is desired to remove.

It is a preferred feature of this invention to utilise PVPP consisting very largely or completely of particles of size larger than about 10 or 20µm. This will facilitate efficient removal by centrifuging.

More specifically, it is preferred that at least 90%, better at least 95% by weight of the PVPP particles are of particle size larger than 10µm.
Possibly at least 90% are larger than 20µm.

Suitable PVPP is commercially available as Polyclar Super R from International Speciality Products, Wayne, New Jersey, USA. It has a mean particle size of between 50 and 100µm.

More preferred is to remove entirely particles of PVPP smaller than 10µm, or reduce the amount of them to less than 3% of the weight of the PVPP. This may be done by sieving the PVPP through a filter screen of 10µm aperture size.

It is believed that the present invention will provide some or all of the following advantages compared with existing practice, e.g. in stabilisation of beer:
less capital cost through avoidance of large filtration vessel,
less requirement for space, again through avoidance of large filtration vessel,
possibility of continuous operation through use of continuously running centrifuge delivering recovered PVPP at relatively high solids content to one of a plurality of filters,
reduced damage to and size reduction of PVPP particles.

An embodiment of the invention will now be described by way of exemplification. This embodiment is concerned with the treatment of beer, but the same process of treatment could be applied to other beverages, with similar apparatus.

### BRIEF DESCRIPTION OF THE DRAWINGS

Fig. 1 is a diagram showing the general arrangement of the apparatus and connections;
Fig. 2 is a cross-section through one of the filters.

### DESCRIPTION OF EMBODIMENT

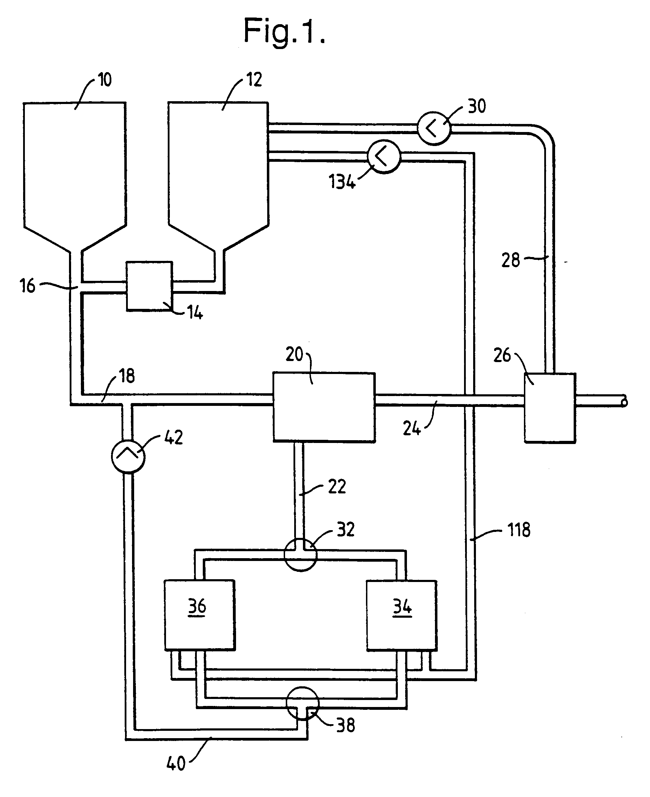

Referring to Fig. 1, beer which has been brewed and filtered, so-called bright beer, is drawn from a supply vessel 10. PVPP slurry is contained in a storage vessel 12. Slurry from this vessel is metered by a flow controller 14, e.g. a peristaltic pump, into the flow of bright beer at 16. It mixes with this bright beer and travels with it along main pipeline 18 to a centrifuge 20. At the centrifuge the PVPP is removed as a viscous concentrate with a solids content of about 35 to 40% by weight. This leaves the centrifuge along line 22 while the main flow of bright beer continues along the main pipeline 24 to an automatic trap filter 26.

This trap filter serves to remove any particles having a size larger than 10 µm. The trap filter is arranged so that when it becomes loaded with solids these are automatically discharged along line 28 via pump 30 back to the slurry vessel 12.

The concentrate which is removed by the centrifuge 20 passes along the line 22 to a valve 32 which directs the flow to one or other of a pair of filters 34,36. Liquid flowing out from this filter travels to a valve 38 and is connected by this valve to a discharge line 40 leading to a pump 42 which delivers the beer back into the main flow line 18 upstream of the centrifuge 20. Thus a small quantity of beer removed at the centrifuge 20 serves as a carrier to carry the removed PVPP to one of the filters 34,36 and is then returned to the main flow of beer.

Centrifuges capable of handling a high volume of liquid and removing solid particles larger than about 1µm from the liquid are commercially available. Suppliers are Alfa-Laval AB, Stockholm, Sweden and Westfalia Separator AG, D-4740 Oelde, Germany.

Automatic trap filters to remove all solids larger than a size limit in the region of 10-20 µm are commonly employed in the brewing industry to provide a final filtration of the beer. Suppliers of such filters include GAF Filters, B9100, Sint-Niklaas, Belgium. The filters 34,36 operate alternately and flow is switched through them by simultaneous operation of the valves 32,38.

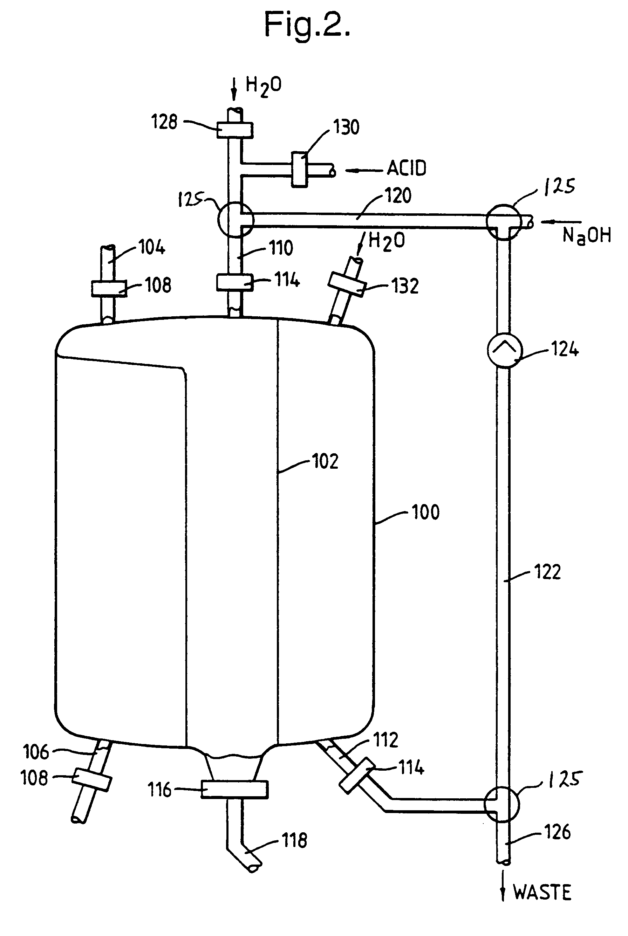

Fig. 2 diagrammatically illustrates the construction of one of these filters 34 or 36. Each filter consists of a surrounding vessel 100 containing a generally cylindrical porous filter member 102 which is a stainless steel mesh with a pore size of about 40 to 50 µm.

Such a pore size gives sufficiently effective removal of PVPP even though some PVPP particles are of smaller particle size ranging down to 10µm. PVPP is a somewhat deformable, cohesive material which forms a porous matrix on the steel mesh.

A main inlet 104 leading from the valve 32 delivers into the interior of the filter member 102. Filtered liquid leaves via exit 106 connected to the valve 38. The inlet 104 and outlet 106 each incorporate a valve 108 serving for closing off the filter 34 or 36 from connecting pipe work.

The filter has an additional pair of connections 110,112 which are used during regeneration and which are normally closed by means of valves 114.

A valve 116 can be opened to allow discharge from within the filter member 102 along an outlet line 118.

During normal operation to collect PVPP from the concentrate received from the centrifuge 20, the valves 114,116 are kept closed while valves 108 are open. The concentrate from the centrifuge enters along line 104. The PVPP particles are retained inside the filter member 102 and the filtered beer leaves along line 106. When a sufficient quantity of PVPP has been collected within the filter member 102, flow is diverted to the other of the two filters by operation of the valves 32,38 and the two valves 108 of the filter shown in Fig. 2 are closed to isolate the filter from the pipelines leading to and from it.

For regenerating the PVPP, hot sodium hydroxide solution is introduced along line 120 and inlet line 110. For a time this is repeatedly circulated through the PVPP, via outlet 112, line 122 and pump 124. After a sufficient time has passed for the polyphenolic materials to have dissolved in the hot alkali it is discharged to waste at 126. Control valves are indicated at 125. The PVPP is then successively washed with water introduced through a valve 128, dilute acid introduced through a valve 130 and then more water all of which are discharged to waste at 126.

The PVPP held within the filter member 102 is now in a fit condition for reuse. In order to remove it, the valves 114 are closed, discharge valve 116 is opened and a flow of water is introduced through a valve 132. This water flows in reverse through the filter member 102 and washes the PVPP particles into discharge line 118. As shown in Fig. 1 this line 118 is connected by a pump 134 to the slurry vessel 12.

## Claims

1. A method of treating a beverage which comprises
(i) contacting the beverage with polyvinyl polypyrrolidone to form a mixture,
(ii) subsequently centrifuging the mixture to remove the polyvinyl polypyrrolidone from a main flow of the mixture, and concentrate the removed polyvinyl polypyrrolidone in a second flow in a small quantity of the beverage,
(iii) delivering said second flow containing the polyvinyl polypyrrolidone which has been removed by centrifuging to a filter, collecting polyvinyl polypyrrolidone from said second flow at the filter, periodically regenerating the collected polyvinyl polypyrrolidone by contact with alkali and then washing and recycling the regenerated polyvinyl polypyrrolidone.

2. A method according to claim 1 carried out using a plurality of filters, regeneration of polyvinyl polypyrrolidone collected by one filter taking place simultaneously with collection at another filter of polyvinyl polypyrrolidone removed by centrifugation.

3. A method according to claim 1 which further comprises filtering said main flow of the beverage subsequent to centrifuging.

4. A method according to claim 1 or claim 2 wherein the amount of polyvinyl polypyrrolidone is between 10 and 100 grams per hectolitre of beverage.

5. A method according to any one of the preceding claims wherein at least 90% by weight of the polyvinyl polypyrrolidone has a particle size of at least 10 µm.

6. A method according to claim 1 wherein at least 90% by weight of the polyvinyl polypyrrolidone has a particle size of at least 20 µm.

7. A method according to claim 1 or claim 2 wherein at least 97% by weight of the polyvinyl polypyrrolidone has a particle size of at least 10 µm.

8. A method according to any one of the preceding claims wherein the polyvinyl pyrrolidone has a mean particle size of between 50 and 100 µm.

9. A method according to any one of the preceding claims wherein the beverage is beer.

10. A method according to any one of the preceding claims wherein the beverage is previously-filtered bright beer.

## Patentansprüche

1. Verfahren zur Behandlung eines Getränks, umfassend die folgenden Schritte:
(i) In-Kontakt-Bringen des Getränks mit Polyvinylpolypyrrolidon, um ein Gemisch zu bilden;
(ii) anschließendes Zentrifugieren des Gemischs zur Entfernung des Polyvinylpolypyrrolidons aus einem Hauptstrom des Gemischs und Aufkonzentrierung des entfernten Polyvinylpolypyrrolidons in einem zweiten Strom in einer geringen Menge des Getränks;
(iii) Führen des zweiten Stroms, der das durch Zentrifugieren entfernte Polyvinylpolypyrrolidon enthält, zu einem Filter, Sammeln des Polyvinylpolypyrrolidons aus dem zweiten Strom am Filter, periodisches Regenerieren des gesammelten Polyvinylpolypyrrolidons durch Kontakt mit Alkali und anschließendes Waschen und Rückführen des regenerierten Polyvinylpolypyrrolidons.

2. Verfahren nach Anspruch 1, das unter Verwendung mehrerer Filter durchgeführt wird, wobei die Regeneration von mittels eines Filters gesammeltem Polyvinylpolypyrrolidon gleichzeitig mit dem Sammeln von durch Zentrifugieren entferntem Polyvinylpolypyrrolidon an einem anderen Filter erfolgt.

3. Verfahren nach Anspruch 1, das weiters das Filtrieren des Hauptstroms des Getränks im Anschluß an das Zentrifugieren umfaßt.

4. Verfahren nach Anspruch 1 oder 2, worin die Menge an Polyvinylpolypyrrolidon zwischen 10 und 100 g pro hl des Getränks beträgt.

5. Verfahren nach einem der vorhergehenden Ansprüche, worin zumindest 90 Gew.-% des Polyvinylpolypyrrolidons eine Teilchengröße von zumindest 10 µm aufweisen.

6. Verfahren nach Anspruch 1, worin zumindest 90 Gew.-% des Polyvinylpolypyrrolidons eine Teilchengröße von zumindest 20 µm aufweisen.

7. Verfahren nach Anspruch 1 oder 2, worin zumindest 97 Gew.-% des Polyvinylpolypyrrolidons eine Teilchengröße von zumindest 10 µm aufweisen.

8. Verfahren nach einem der vorhergehenden Ansprüche, worin das Polyvinylpolypyrrolidon eine mittlere Teilchengröße von zwischen 50 und 100 µm aufweist.

9. Verfahren nach einem der vorhergehenden Ansprüche, worin das Getränk Bier ist.

10. Verfahren nach einem der vorhergehenden Ansprüche, worin das Getränk vorfiltriertes helles Bier ist.

## Revendications

1. Méthode de traitement d'une boisson qui comprend
(i) la mise en contact de la boisson avec de la polyvinyl polypyrrolidone pour former un mélange,
(ii) la centrifugation subséquente du mélange pour éliminer la polyvinyl polypyrrolidone d'un écoulement principal du mélange, et concentrer la polyvinyl polypyrrolidone éliminée dans un second écoulement dans une petite quantité de la boisson,
(iii) la fourniture dudit second écoulement contenant la polyvinyl polypyrrolidone qui a été éliminée par centrifugation à un filtre, collectant la polyvinyl polypyrrolidone dudit second écoulement à l'endroit du filtre en régénérant périodiquement la polyvinyl polypyrrolidone collectée par contact avec un alcali puis en lavant et en recyclant la polyvinyl polypyrrolidone régénérée.

2. Méthode selon la revendication 1 effectuée en utilisant un certain nombre de filtres, la régénération de la polyvinyl polypyrrolidone collectée par un filtre ayant lieu simultanément avec la collection sur un autre filtre de la polyvinyl polyrrolidone éliminée par centrifugation.

3. Méthode selon la revendication 1 qui comprend de plus la filtration dudit écoulement principal de la boisson subséquemment à sa centrifugation.

4. Méthode selon la revendication 1 ou la revendication 2, où la quantité de polyvinyl polyrrolidone est comprise entre 10 et 100 grammes par hectolitre de la boisson.

5. Méthode selon l'une quelconque des revendications précédentes où au moins 90% en poids de la polyvinyl polyrrolidone a une grandeur de particules d'au moins 10 µm.

6. Méthode selon la revendication 1 où au moins 90% en poids de la polyvinyl polyrrolidone a une grandeur de particules d'au moins 20 µm.

7. Méthode selon la revendication 1 ou la revendication 2 où au moins 97% en poids de la polyvinyl polyrrolidone a une grandeur de particules d'au moins 10 µm.

8. Méthode selon l'une quelconque des revendications précédentes où la polyvinyl polyrrolidone a une grandeur moyenne de particules comprise entre 50 et 100 µm.

9. Méthode selon l'une quelconque des revendications précédentes où la boisson est de la bière.

10. Méthode selon l'une quelconque des revendications précédentes où la boisson est de la bière claire filtrée au préalable.
